# EUROPÄISCHE PATENTSCHRIFT

(11) **EP 1 475 323 B1**
(45) Veröffentlichungstag und Bekanntmachung des Hinweises auf die Patenterteilung: **06.09.2006**
(21) Anmeldenummer: 04006106.1
(22) Anmeldetag: 15.03.2004
(51) Int. Cl.: B65G 19/02

(54) **Hängeförderbahnweiche**
Switch for overhead rail conveyor
Aiguillage pour système de voie suspendue

(30) Priorität: 05.05.2003 DE 10320213
(43) Veröffentlichungstag der Anmeldung: 10.11.2004
(73) Patentinhaber: Gärtner, Franz, 97656 Oberelsbach (DE)
(72) Erfinder: Gärtner, Franz, 97656 Oberelsbach (DE)
(74) Vertreter: Sommer, Peter

(56) Entgegenhaltungen:
- EP-A- 1 279 630
- DE-A- 10 123 598
- US-A- 3 002 635
- US-A- 5 271 333

## Beschreibung

Die Erfindung betrifft eine Hängeförderbahnweiche für eine Förderbahn zum Transport von hängenden Objekten, insbesondere von auf Bügeln hängenden Kleidungsstücken, auf der Förderbahn, mit einer Förderführung für ein antreibbares Förderorgan, einer ersten Tragelementführung für eine Transportrolle, an der das Objekt mittels eines Tragelements derart abhängbar ist, dass das Tragelement mit dem Förderorgan in Eingriff steht, und einer zweiten Tragelementführung.

Die Erfindung betrifft ferner eine Hängeförderbahn zum Transport von hängenden Objekten, insbesondere von auf Bügeln hängenden Kleidungsstücken, auf der Hängeförderbahn mit einer Förderführung für ein antreibbares Förderorgan und einer Tragelementführung für Transportrollen, an denen die Objekte mittels eines Tragelements derart abhängbar ist, dass das jeweilige Tragelement mit dem Förderorgan in Eingriff steht.

Die Erfindung betrifft ferner eine Hängeförderanlage zum Transport von hängenden Objekten, insbesondere von auf Bügeln hängenden Kleidungsstücken, aufweisend eine Hängeförderbahn mit einer Förderführung, die ein Förderorgan führt, einer steuerbaren Antriebseinrichtung zum Antreiben des Förderorgans und einer Tragelementführung für Transportrollen, an denen die Objekte jeweils mittels eines Tragelements derart abhängbar sind, dass das jeweilige Tragelement mit dem Förderorgan in Eingriff steht.

Die vorstehenden Vorrichtungen sind bekannt.

Aus der US 3,002,635 A geht eine Hängefördervorrichtung für an Haken hängendes Gut hervor, die eine erste, untere Tragelementführung und eine zweite, obere Tragelementführung aufweist, wobei die zweite Tragelementführung von der ersten beabstandet ist. Des Weiteren ist eine Schwenkführung vorhanden, deren eines Ende an der zweiten Tragelementführung derart angelenkt ist, dass die Schwenkführung um eine horizontale Achse klappbar ist. Das zweite Ende der Schwenkführung schlägt an der ersten Tragelementführung von oben an, so dass die Schwenkführung die erste und die zweite Tragelementführung miteinander verbindet. Dabei ist die Schwenkführung im wesentlichen vertikal fluchtend zur ersten Tragelementführung angeordnet. Des Weiteren ist die Schwenkführung zur Betätigung mittels des Hakens ausgeführt, indem ein auf der ersten Tragelementführung ankommender Haken die Schwenkführung um die horizontale Achse nach oben wegklappt und unter der Schwenkführung durchfährt. Nachdem der Haken die Schwenkführung passiert hat, klappt die Schwenkführung aufgrund der Gewichtskraft nach unten in ihre Ausgangsstellung zurück, in der sie an der ersten Tragelementführung anliegt und die beiden Tragelementführungen miteinander verbindet.

DE 101 23 598 offenbart eine Anlage zum Transport von auf Bügeln hängenden Kleidungsstücken auf Förderbahnen. Die Kleidungsstücke werden mittels Transportrollen transportiert, die eine axiale Durchgangsöffnung aufweisen. Ein Haken eines Bügels, auf dem das zu transportierende Kleidungsstück hängt, ist in die Durchgangsöffnung eingehängt. Die Rolle läuft auf der Förderbahn. Die Anlage weist eine Aufgabestelle bzw. Einschleusstelle für die Transportrolle in die Förderbahn mit einer Gefällestrecke auf, die seitlich in die Förderbahn mündet. Die Gefällestrecke umfasst einen feststehenden Rollsteg mit einer Transportrollen-Laufbahn, der in den Rollsteg der Förderbahn einmündet. An einer Profilschiene sind ein Rollstegabschnitt und ein Führungsstegabschnitt angelenkt. Der Rollstegabschnitt und der Führungsstegabschnitt sind mit einander durch eine Bügelschlaufe verbunden, die in einer vertikalen Ebene um die Förderbahn herumgeführt ist. Die Weiche wird gestellt, indem die Bügelschlaufe horizontal in der vertikalen Ebene verschoben wird. Wenn die Bügelschlaufe nicht bis zum Anschlag der Stegabschnitte verschoben ist, kann es zu Entgleisungen kommen.

Die Aufgabe der Erfindung besteht darin, eine verbesserte weiche zu schaffen.

Die Erfindung löst die Aufgabe mit einer Hängeförderbahnweiche für eine Förderbahn zum Transport von hängenden Objekten, insbesondere von auf Bügeln hängenden Kleidungsstücken, auf der Förderbahn, mit einer Förderführung für ein antreibbares Förderorgan, einem ersten Hängeförderbahnstück, das eine erste Tragelementführung für wenigstens eine Transportrolle aufweist, an der das Objekt mittels eines Tragelements derart abhängbar ist, dass das Tragelement mit dem Förderorgan in Eingriff steht, einem zweiten Hängebahnförderstück, das eine zweite Tragelementführung, die von der ersten Tragelementführung beabstandet ist, aufweist, und mit einer Schwenkführung, deren eines Ende an der einen Tragelementführung angelenkt ist und die derart voreingestellt ist, dass das andere, freie Ende der Schwenkführung an die andere Tragelementführung anschlägt, so dass die Schwenkführung die erste und die zweite Tragelementführung miteinander verbindet, wobei die Schwenkführung zur Betätigung mittels des Tragelements eingerichtet ist und wobei das zweite Hängeförderbahnstück an der Seite des ersten Hängeförderbahnstücks angeschlossen ist und die Schwenkführung derart an der einen Tragelementführung gelagert ist, dass die voreingestellte Schwenkführung bei Betätigung sowohl angehoben als auch seitlich ausgelenkt wird und dass die Schwenkführung nach der Betätigung aufgrund der Gewichtskraft der Schwenkführung oder aufgrund einer Zugfederkraft in die Voreinstellung zurückfällt.

Die erfindungsgemäße Hängeförderbahnweiche ist besonders einfach im Aufbau und störungssicher im Betrieb. Der Aufbau ist einfach, weil die Weiche passiv stellbar ist, wenn ein Weg der Transportrolle durch die Weiche bestimmt ist, und somit ein Aktivglied zum Einstellen der Weiche in Abhängigkeit des bestimmten Weges nicht erforderlich ist. Weil die Weiche passiv funktioniert, ist eine Anfälligkeit für Steuerungsfehler minimiert. Zudem ist die Betriebssicherheit der Weiche besonders groß, weil die Schwerkraft ein besonders sicheres Mittel ist, um die Schwenkführung in die Voreinstellung zurückzuführen.

Bei der Ausführungsform der Erfindung mit der Zugfedervorspannung ist die Schwenkführung in die Voreinstellung etwa mittels einer Zugfeder vorgespannt. Bei Betätigung der voreingestellten Schwenkführung wird die Schwenkführung gegen die Vorspannung ausgelenkt. Nach der Betätigung kehrt die Schwenkführung aufgrund der Vorspannung in die Voreinstellung zurück.

Bei einer Ausführungsform ist die Schwenkführung der Weiche in eine Durchlaufstellung voreingestellt, in der die Transportrolle mit dem Tragelement auf einem voreingestellten Transportweg durch die Weiche läuft, ohne die Schwenkführung auszulenken. Falls die Transportrolle mit dem Tragelement entlang eines nicht voreingestellten Transportweges durch die Weiche läuft, lenkt das Tragelement die Schwenkführung aus. Anschließend bewegt sich die Schwenkführung zurück in die Voreinstellung. Aufgrund der Voreinstellung in die Durchlaufstellung befindet sich die weiche meist in einer sicheren Betriebsstellung, so dass die Gefahr einer Entgleisung minimiert ist.

Bei einer Ausführungsform ist die Schwenkführung derart voreingestellt, dass die Schwenkführung betätigbar ist, wenn die Transportrolle mit dem Tragelement in einer vorgegebenen Betriebstransportrichtung durch die Hängeförderbahnweiche läuft, und dass die Schwenkführung das Tragelement blockiert, wenn die Transportrolle mit dem Tragelement in entgegen der vorgegebenen Betriebstransportrichtung in die Hängeförderbahnweiche läuft.

Bei einer Ausführungsform ist die Hängeförderbahnweiche derart ausgebildet, dass, wenn die Hängeförderbahnweiche so angeordnet ist, dass die erste Tragelementführung horizontal verläuft, die zweite Tragelementführung gegen die Horizontale etwas geneigt ist und in Betriebstransportrichtung abfällt. Im Bereich der Neigung erfolgt der Transport des Objekts auf der zweiten Tragelementführung aufgrund der Gewichtskraft des Objekts. Somit kommt die Hängeförderbahnweiche für den Transport des Objekts auf der zweiten Tragelementführung ohne das Förderorgan aus.

Bei einer Ausführungsform der erfindungsgemäßen Hängeförderbahnweiche läuft die zweite Tragelementführung in der Betriebstransportrichtung auf die erste Tragelementführung zu und die Schwenkführung ist an der zweiten Tragelementführung gelagert. Bei dieser Ausführungsform funktioniert die Weiche zum Einschleusen von Transportrollen, die auf der zweiten Tragelementführung in die Hängeförderbahnweiche einlaufen, auf die erste Tragelementführung. Falls eine Transportrolle mit einem Tragelement auf der ersten Tragelementführung in der vorgegebenen Betriebstransportrichtung in die Weiche einläuft, betätigt das Tragelement die Schwenkführung und die Transportrolle durchläuft die Weiche auf der ersten Tragelementführung. Falls die Transportrolle mit dem Tragelement auf der zweiten Tragelementführung in der vorgegebenen Betriebstransportrichtung in die Weiche einläuft, durchläuft die Transportrolle die Weiche auf der zweiten Tragelementführung, auf der Schwenkführung bis zum Anschlag an die erste Tragelementführung und auf der ersten Tragelementführung, ohne dass es einer Betätigung der Weiche durch das Tragelement bedarf.

Bei einer anderen Ausführungsform der erfindungsgemäßen Hängeförderbahnweiche läuft die zweite Tragelementführung in der Betriebstransportrichtung von der ersten Tragelementführung weg und die Schwenkführung ist an der ersten Tragelementführung gelagert. Bei dieser Ausführungsform ist die Weiche zum Ausleiten von Transportrollen stellbar, die auf der ersten Tragelementführung in die Hängeförderweiche einlaufen, auf die zweite Tragelementführung. Bevorzugt weist die Hängeförderbahnweiche, die zum Ausleiten eingerichtet ist, ein Steuerstellglied auf zum steuerbaren Einstellen der Weiche entweder in eine Förderstellung, in der die Transportrolle die Hängeförderbahnweiche auf der ersten Tragelementführung durchläuft, oder in eine Abzweigungsstellung, in der die Transportrolle von der ersten Tragelementführung auf die zweite Tragelementführung gelenkt wird.

Bei einer Ausführungsform ist das Steuerstellglied in die Förderstellung voreingestellt, durch Ansteuern in die Abzweigungsstellung gestellt wird und nach dem Ansteuern in die Position der Voreinstellung zurückkehrt. Diese Ausführungsform der Weiche ist besonders geeignet, falls die Weiche nur ausnahmsweise zum Ausleiten von Transportrollen dienen soll, weil dann nur in seltenen Fällen eine Ansteuerung des Steuerstellglieds erforderlich ist.

Bevorzugt ist das Steuerstellglied als ein Verbindungsstück ausgebildet, das in der Förderstellung einen Eintrittsabschnitt der ersten Tragelementführung mit einem Austrittsabschnitt der ersten Tragelementführung verbindet und das in der Abzweigungsstellung den Eintrittsabschnitt der ersten Tragelementführung mit der zweiten Tragelementführung verbindet. Bei dieser Ausführungsform kommt die Weiche mit einer besonders geringen Anzahl von Bauteilen aus, weil das Steuerstellglied mehrere Führungsfunktionen übernimmt.

Bei einer Ausführungsform weist die Tragelementführung eine Bodenschiene und eine Deckenschiene auf, die zum führenden Eingriff mit der Transportrolle vorgesehen sind. Bevorzugt weist dabei das als Verbindungsstück ausgebildete Steuerstellglied einen Verbindungsarm auf, der als Bodenschieneoausgebildet ist, und eine Verbindungshand, die als Deckenschiene ausgebildet ist. Der Verbindungsarm ist mit der Verbindungshand bevorzugt einstückig ausgebildet, wobei die Verbindungshand an einem freien Ende des Verbindungsarms angeformt ist.

Bevorzugt ist das Steuerstellglied an der ersten Tragelementführung derart angelenkt, dass in der Förderstellung des Steuerstellglieds der als Bodenschiene ausgebildete erste Verbindungsarm die Bodenschiene im Eintrittsabschnitt der ersten Tragelementführung mit der Bodenschiene im Austrittsabschnitt der ersten Tragelementführung verbindet, und in der Abzweigungsstellung des Steuerstellglieds die als Deckenschiene ausgebildete Verbindungshand die Deckenschiene im Eintrittsabschnitt der ersten Tragelementführung mit der Deckenschiene der zweiten Tragelementführung verbindet.

Die Erfindung löst die Aufgabe ferner mittels einer Hängeförderbahn zum Transport von hängenden Objekten, insbesondere von auf Bügeln hängenden Kleidungsstücken, auf der Hängeförderbahn, mit einer Förderführung für ein antreibbares Förderorgan, einer Tragelementführung für Transportrollen, an denen die Objekte mittels eines Tragelements derart abhängbar sind, dass das jeweilige Tragelement mit dem Förderorgan in Eingriff steht, und einer erfindungsgemäßen Hängeförderbahnweiche.

Die Erfindung löst die Aufgabe ferner mittels einer Hängeförderanlage zum Transport von hängenden Objekten, insbesondere von auf Bügeln hängenden Kleidungsstücken, aufweisend eine Hängeförderbahn mit einer Förderführung, die ein Förderorgan führt, einer steuerbaren Antriebseinrichtung zum Antreiben des Förderorgans und einer Tragelementführung für Transportrollen, an denen die Objekte jeweils mittels eines Tragelements derart abhängbar sind, dass das jeweilige Tragelement mit dem Förderorgan in Eingriff steht, wobei die Hängeförderbahn erfindungsgemäß ausgebildet ist.

Nachfolgend werden Ausführungsbeispiele der Erfindung anhand der Figuren näher erläutert. Es zeigen:

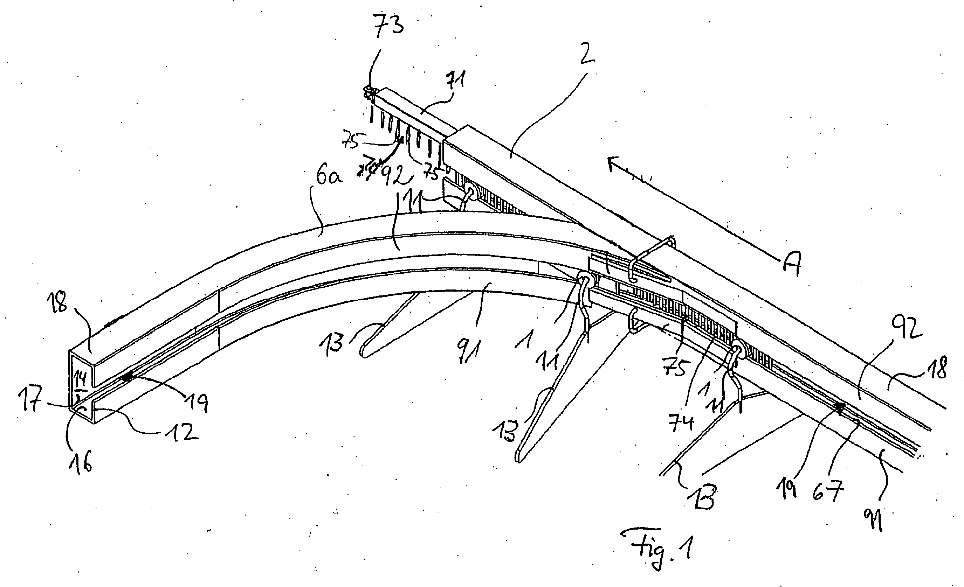

- Fig. 1: eine Weiche einer Hängeförderanlage nach dem Stand der Technik;
- Fig. 2: schematisch einen Abschnitt eines Ausführungsbeispiels einer erfindungsgemäßen Hängeförderanlage zum Transport von auf Bügeln hängenden Kleidungsstücken;
- Fig. 3: einen Querschnitt durch ein Ausführungsbeispiel einer Hängeförderbahnweiche gemäß der Erfindung;
- Fig. 4: eine perspektivische Ansicht eines weiteren Ausführungsbeispiels der Hängeförderbahnweiche gemäß der Erfindung, bei dem die Hängeförderweiche als Einlaufweiche ausgebildet ist, wobei eine Transportrolle mit einem Kleiderbügel auf einer ersten Laufbahn rollt;
- Fig. 5: eine perspektivische Ansicht der Einlaufweiche in Fig. 4, wobei die Transportrolle auf einer zweiten Laufbahn in einem ersten Abschnitt der zweiten Laufbahn rollt;

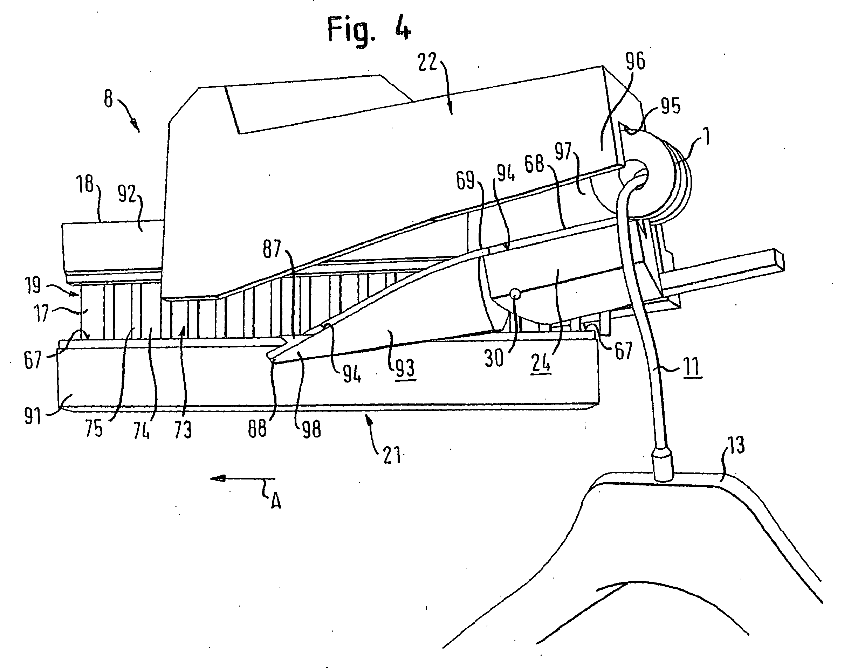

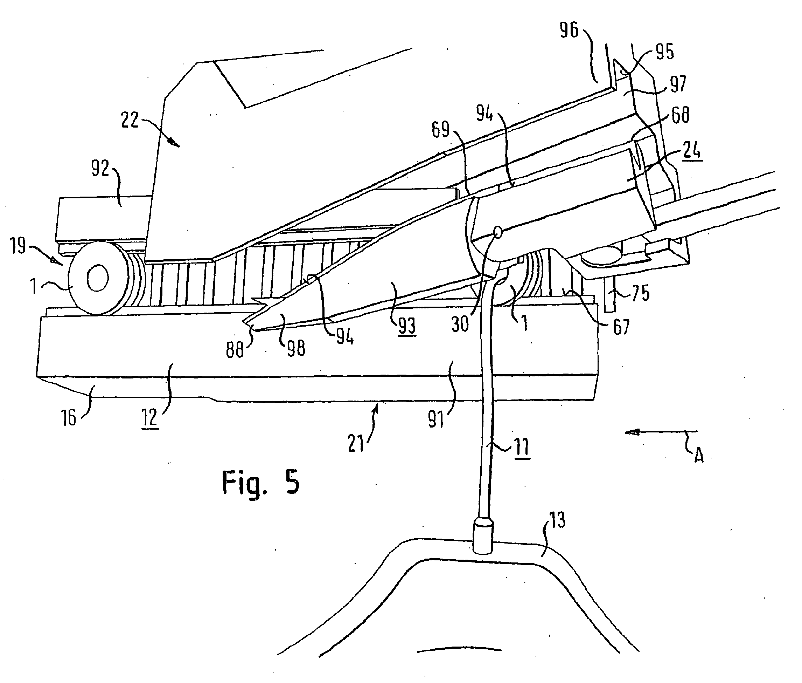

- Fig. 5: eine perspektivische Ansicht der Hängeförderbahnweiche in Fig. 4 und 5, wobei die Transportrolle auf der zweiten Laufbahn in einem zweiten Abschnitt der zweiten Laufbahn rollt;

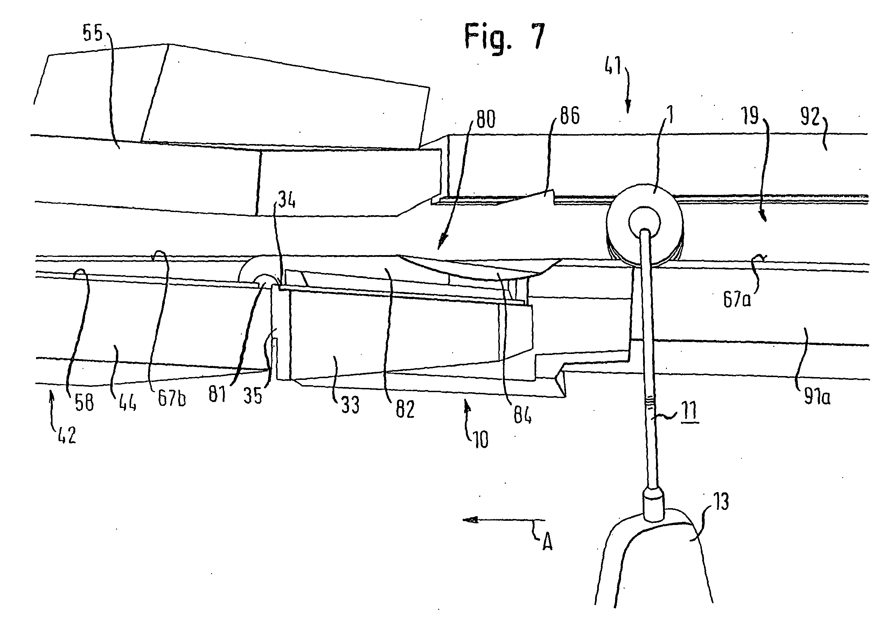

- Fig. 7: eine perspektivische Ansicht eines Ausführungsbeispiels der Hängeförderweiche gemäß der Erfindung, bei dem die Hängeförderweiche als Auslaufweiche ausgebildet ist, wobei eine Transportrolle mit einem Kleiderbügel auf einer ersten Laufbahn in einem Eintrittsabschnitt der ersten Laufbahn rollt;

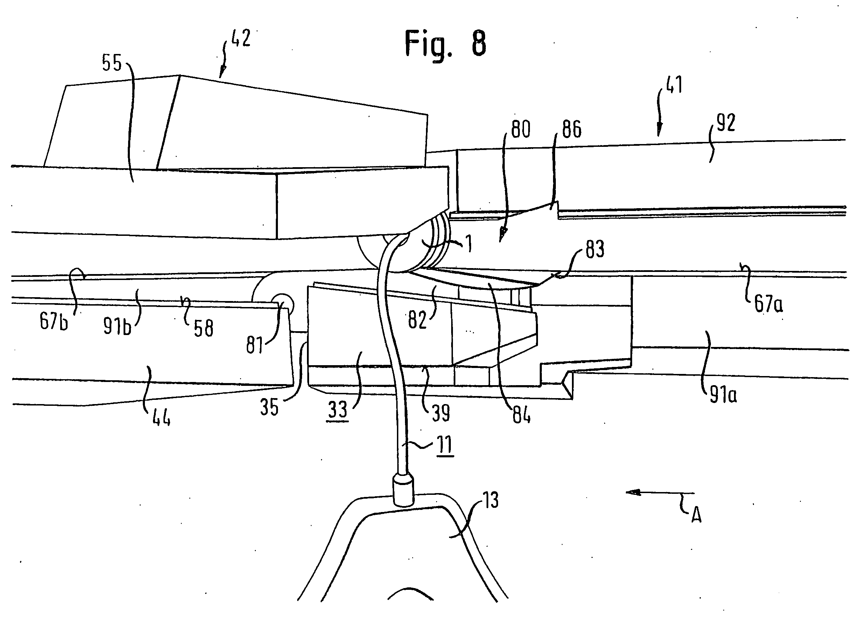

- Fig. 8: eine perspektivische Ansicht der Auslaufweiche in Fig. 7, wobei die Transportrolle auf einem Verbindungsarm rollt;

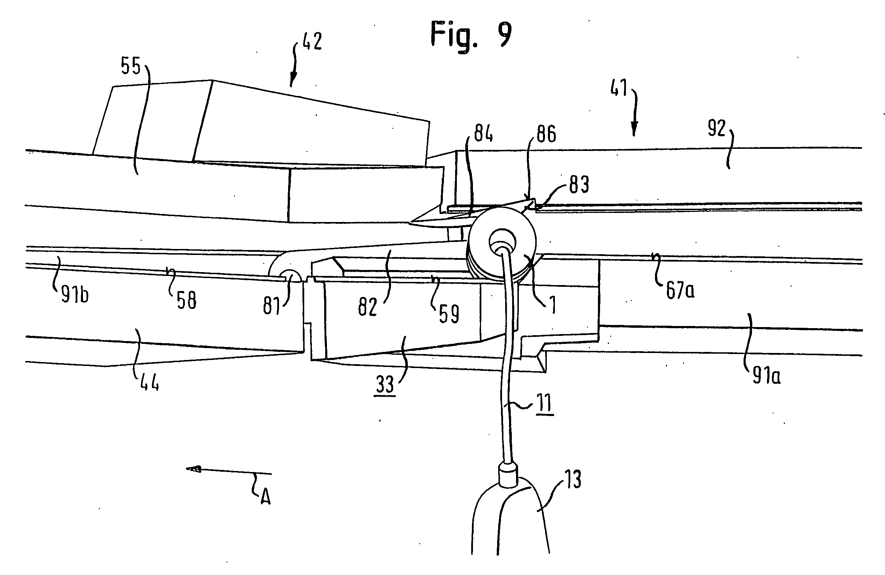

- Fig. 9: eine perspektivische Ansicht der Auslaufweiche in Fig. 7 und 8, wobei die Transportrolle auf eine Schwenkschiene einrollt;

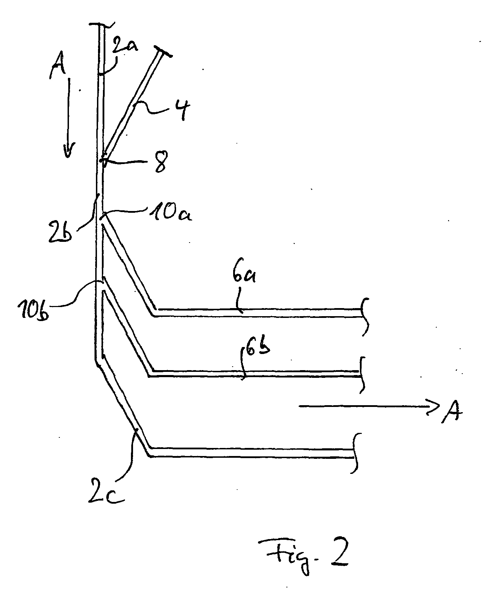

Die Hängeförderanlage umfasst eine in einem offenen Kreis geführte Hängeförderbahn 2a, 2b, 2c (Fig. 2). Die Hängeförderbahn weist eine Zuführbahn 4 zum Zuführen von Kleidungsstücken zum Transport an den Förderkreis und Abwurfbahnen 6a, 6b zum Fördern aussortierter Kleidungsstücke auf. Die Hängeförderbahn ist für einen Transport der Kleidungsstücke in einer Betriebstransportrichtung (A) eingerichtet. Die Zuführbahn 4 mündet in Betriebstransportrichtung (A) über eine Einlaufweiche 8 in die Hängeförderbahn 2b des Förderkreises. Die Abwurfbahnen 6a, 6b zweigen von der Hängeförderbahn 2b in Betriebstransportrichtung (A) über Auslaufweichen 10a, 10b ab.

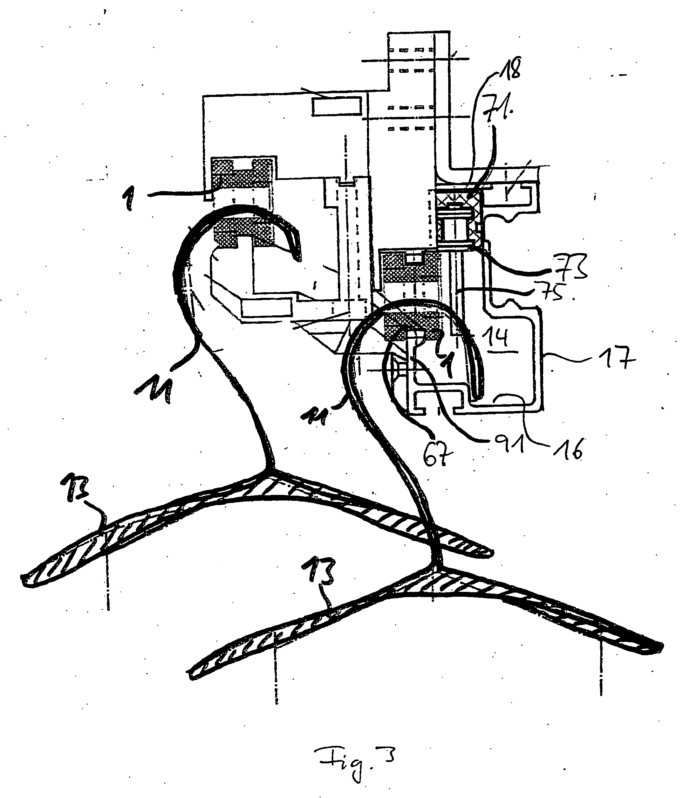

Die Hängeförderbahn 2 weist ein im wesentlichen C-förmiges Profil 12 auf, das zur Aufnahme von Transportrollen 1 vorgesehen ist, in die jeweils ein Haken 11 eines Kleiderbügels 13, auf dem ein Kleidungsstück (nicht dargestellt) hängt, einhängbar ist (Fig. 3). Das C-förmige Profil 12 weist eine Bodenwandung 16, eine der Bodenwandung 16 gegenüberliegende Deckenwandung 18 und eine Seitenwandung 17 auf. Der Seitenwandung 17 gegenüberliegend weist das C-förmige Profil 12 eine Bahnöffnung 19 auf. Das C-förmige Profil 12 umfasst einen Innenraum 14.

Die Hängeförderbahn 2 weist eine Bodenschiene 91 auf und eine Deckenschiene 92, die der Bodenschiene 91 gegenüber liegt. Die Bodenschiene 91 bildet einen Rollsteg mit einer Hauptförderlaufbahn 67 für die Transportrollen 1. Die Deckenschiene 92 bildet einen Führungssteg für die Transportrollen 1. In die Transportrolle 1 ist ein Haken 11 eines Kleiderbügels 13 mit dem freien Ende 15 des Hakens 11 derart eingehängt, dass das freie Ende 15 des Hakens aus der Transportrolle 1 herausragt. An dem Kleiderbügel 13 ist ein Kleidungsstück (nicht dargestellt) abgehängt.

Im Innenraum 14 der Hängeförderbahn 2 ist im oberen Bereich eine Förderführung 71 ausgebildet, in der eine Förderkette 73 angeordnet ist. In einem Antriebsabschnitt der Hängeförderbahn 2 greift ein Ritzel eines Antriebszahnrades (nicht dargestellt) in die Förderkette 73 ein. Die Förderkette 73 ist für einen im wesentlichen waagerechten Umlauf derart in der Förderführung 71 angeordnet, dass die Kettenflansche der Förderkette 73 etwa horizontal liegen. Die Kettenglieder sind mittels Förderstiften 75 verbunden, deren Länge größer als die Breite der Förderkette 73 ist. Die Förderstifte 75 ragen nach unten über die Kettenflansche hinaus. Zwei benachbarte Förderstifte 75 sind voneinander beabstandet und bilden einen Zwischenraum 74. Das freie Ende des 15 in der Transportrolle 1 hängenden Hakens 11 greift in den Zwischenraum zwischen zwei benachbarten Förderstiften 75 hinein.

Nachfolgend wird die Einlaufweiche 8 erläutert (Fig. 4 - 6). Die Einlaufweiche 8 weist ein erstes Hängeförderbahnstück 21 der oben beschriebenen Hängeförderbahn 2 mit dem C-förmigen Profil 12 auf. An der Seite des ersten Hängeförderbahnstücks 21, an der das C-förmige Profil 12 die Bahnöffnung 19 aufweist, ist ein zweites Hängeförderbahnstück 22 an dem ersten Hängeförderbahnstück 21 befestigt.

Das zweite Hängeförderbahnstück 22 weist eine Einlaufbodenschiene 24 auf, die von der Bodenschiene 91 des ersten Hängeförderbahnstücks 21 beabstandet ist. Die Einlaufbodenschiene 24 läuft in einem spitzen Winkel auf die Bodenschiene 91 des ersten Hängeförderbahnstücks 21 zu und weist in Richtung der Bodenschiene 91 ein Gefälle auf. Die Einlaufbodenschiene 24 weist einen Einlaufsteg auf, dessen Oberfläche eine Einlaufbahn 68 bildet.

An der Einlaufbodenschiene 24 ist eine Schwenkschiene 93 mit einem Verbindungsrollsteg 94 für die Transportrollen 1 angelenkt, dessen Oberfläche eine Verbindungslaufbahn 69 bildet. Ein Ende der Schwenkschiene 93 ist mittels eines Lagerstiftes 30 an der Einlaufbodenschiene 24 schwenkbar gelagert. Ein dem gelagerten Ende der Schwenkschiene 93 gegenüber liegendes freies Ende 98 schmiegt sich an die Bodenschiene 91 des ersten Hängeförderbahnstücks 21 an. Das freie Ende 98 der Schwenkschiene 30 ist in eine Horizontalzunge 87 und eine Vertikalzunge 88 aufgespalten. Die Horizontalzunge 87 liegt auf der Hauptförderlaufbahn 67 auf und verlängert so die Verbindungslaufbahn 69 der Schwenkschiene auf die Hauptförderlaufbahn 67. Die Vertikalzunge 88 liegt an der Bodenschiene 91 seitlich an und gibt der Schwenkschiene 93 Halt. Die Schwenkschiene 93 ist mittels eines Lagerstiftes 30 an der Einlaufbodenschiene 24 derart schräg gelagert, dass die Schwenkschiene 93 bei einer Schwenkbewegung sowohl nach oben als auch zur Seite ausgelenkt wird.

Ferner weist das zweite Hängebahnförderstück 22 der Einlaufbodenschiene 24 sowie der Schwenkschiene 93 oben gegenüberliegend einen Führungskanal auf. Der Führungskanal weist eine Deckenwandung 95, eine Führungsmanschette 96 und eine Führungswand 97 auf. Die Führungsmanschette 96 und die Führungswand 97 erstrecken sich seitlich von der Deckenwandung 95 nach unten etwa bis zur halben Höhe zwischen der Einlaufbodenschiene 24 und der Deckenwandung 95.

Die Einlaufbahn 68, die Verbindungslaufbahn 69 und die Hauptförderlaufbahn 67 bilden in dieser Reihenfolge in der Transportbetriebsrichtung (A) eine voreingestellte Durchlaufbahn durch die Einlaufhängeförderweiche 8.

Nachfolgend wird der Betrieb der Einlaufweiche 8 erläutert. Der nicht dargestellte Antrieb der Förderkette wird eingeschaltet. Die Förderkette 73 läuft in der Förderanlage endlos um. Insbesondere läuft die Förderkette 73 horizontal in der Förderführung 71 der Hängeförderbahn 2.

Eine Transportrolle 1 mit dem Kleiderbügel 13, der an dem Haken 11 in die Transportrolle 1 eingehängt ist, laufe auf der Einlaufbahn 68 der Einlaufbodenschiene 24 in die Einlaufweiche 8 ein (Fig. 4). Die Transportrolle 1 rollt in der Betriebstransportrichtung (A) auf die Schwenkschiene 93 der Einlaufweiche 8 zu. Aufgrund des Gefälles der Einlaufbahn 68 und des Gefälles der Verbindungslaufbahn 69 rollt die Transportrolle 1 über die Einlaufbahn 68 und folgt der voreingestellten Durchlaufbahn durch die Einhängeförderweiche 8. Wenn die Transportrolle das freie Ende 98 der Schwenkschiene 93 erreicht, greift das freie Ende 15 des in die Transportrolle 1 eingehängten Hakens 11 in den Zwischenraum 74 zwischen zwei Förderstifte 75 der Förderkette 73 ein. Der zweite Förderstift 75 erfasst das freie Ende des Hakens 11 und schleppt den Haken 11 mitsamt Transportrolle 1 und Kleiderbügel 13 sowie ggf. anhängendem Kleidungsstück horizontal auf der Hängeförderbahn 2 von der Einlaufweiche 8 fort.

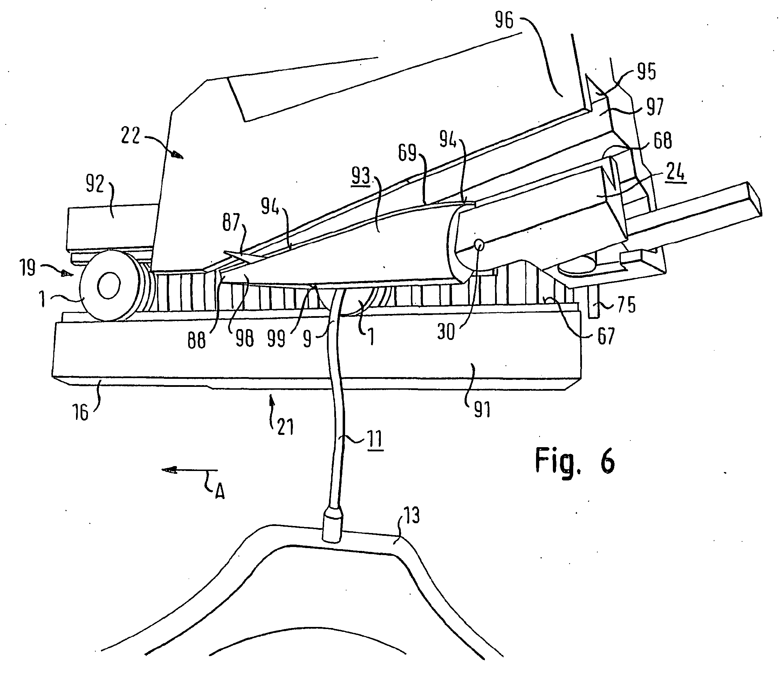

Nun werde eine Transportrolle 1 mit dem eingehängten Haken 11, an dem der Kleiderbügel 13 befestigt ist, auf der Hauptförderlaufbahn 67 der Bodenschiene 91 von der Förderkette 73 in die Einlaufweiche 8 eingeschleppt (Fig. 5). Die Transportrolle 1 rollt in der Betriebstransportrichtung (A) auf die Schwenkschiene 93 der Einlaufweiche 8 zu. Das freie Ende 98 der Schwenkschiene 93, das sich an die Bodenschiene 91 schmiegt, befindet sich im Transportweg des Hakens 11 auf der Hauptförderlaufbahn 67. Die Förderkette 73 schleppt den Haken 11 jedoch weiter (Fig. 6). Ein Rücken 9 des Hakens 11 stößt gegen eine Unterseite 99 der Schwenkschiene 93 und drückt die Schwenkschiene 93 gegen die Gewichtskraft der Schwenkschiene 93 nach oben. Die auf dem Lagerstift 30 gelagerte Schwenkschiene 93 lenkt dabei sowohl nach oben als auch zur Seite aus. Dabei entfernt sich das freie Ende 98 der Schwenkschiene 93 von der Bodenschiene 91, während der Haken 11 die Transportbewegung durch die Einlaufweiche 8 fortsetzt. Nachdem der Haken 11 das freie Ende 98 der Schwenkschiene 93 passiert hat, schwenkt die Schwenkschiene 93 aufgrund ihres Gewichtes,wieder nach unten und zugleich wegen des schräg gelagerten Lagerstiftes 30 zurück in die Ausgangsstellung, in der sich das freie Ende 98 an die Bodenschiene 91 anschmiegt. Somit hat die Förderkette 73 den Haken 11 mittels der Transportrolle 1 auf der nicht voreingestellten Bahn durch die Einlaufweiche 8 geschleppt, ohne dass die Einlaufweiche 8 angesteuert wurde. Vielmehr hat der Haken 11 die Schwenkschiene 93 betätigt und dadurch eine Bahnfreigabe bewirkt.

Nachfolgend wird die Auslaufweiche 10 erläutert. Die Auslaufweiche 10 weist - wie die Einlaufweiche 8 - ein erstes Hängeförderbahnstück 41 der oben beschriebenen Hängeförderbahn 2 mit dem C-förmigen Profil 12 auf (in den Figuren mit der Auslaufweiche sind die Förderstifte nicht dargestellt).

An der Seite des ersten Hängeförderbahnstücks 41, an der das C-förmige Profil 12 die Bahnöffnung 19 aufweist, ist ein zweites Hängeförderbahnstück 42 an dem ersten Hängeförderbahnstück 41 befestigt. Das zweite Hängeförderbahnstück 42 weist eine Auslaufbodenschiene 44 auf, die von der Bodenschiene 91 des ersten Hängeförderbahnstücks 41 beabstandet ist. Die Auslaufbodenschiene 44 läuft in einem spitzen Winkel von der Bodenschiene 91 des ersten Hängeförderbahnstücks 41 weg und weist in Richtung der Bodenschiene 91 eine Steigung auf. Die Auslaufbodenschiene 44 weist einen Auslaufsteg auf, dessen Oberfläche eine Auslaufbahn 58 bildet.

An der Bodenschiene 91 ist eine Schwenkschiene 33 mit einem Verbindungsrollsteg 34 für die Transportrollen 1 angelenkt, dessen Oberfläche eine Verbindungslaufbahn 59 mit Gefälle bildet. Ein Ende der Schwenkschiene 33 ist mittels eines Lagerstiftes (in Fig. 7 bis 9 nicht dargestellt) an der Bodenschiene 91 schwenkbar gelagert. Ein dem gelagerten Ende der Schwenkschiene 33 gegenüber liegendes freies Ende 35 schmiegt sich an die Auslaufschiene 44 des zweiten Hängeförderbahnstücks 42 an. Die Schwenkschiene 33 ist derart schräg gelagert, dass die Schwenkschiene 33 bei einer Schwenkbewegung sowohl nach oben als auch zur Seite in Richtung des ersten Hängeförderbahnstücks 41 ausgelenkt wird.

Der Auslaufbodenschiene 44 sowie der Schwenkschiene 33 oben gegenüberliegend weist das zweite Hängebahnförderstück 42 eine Deckenführungsschiene 55 auf.

Ein erster Abschnitt 67a der Hauptförderlaufbahn 67, die Verbindungslaufbahn 59 und die Auslaufbahn 58 bilden in dieser Reihenfolge in der Betriebstransportrichtung (A) eine voreingestellte Durchlaufbahn durch die Auslaufweiche 10.

Das erste Hängeförderbahnstück 41 der Auslaufweiche 10 unterscheidet sich von dem oben beschriebenen Hängeförderbahnstück 21 der Einlaufweiche 8 darin, dass die Bodenschiene 91 in der Mitte der Auslaufweiche 10 unterbrochen ist und somit in zwei Segmente 91a, 91b geteilt ist. Ferner weist das erste Hängeförderbahnstück 41 ein drehbar gelagertes, ansteuerbares Steuerstellglied 80 auf, das mittels eines nicht dargestellten Mechanismus (Vorspannungsfeder, Relais, Magnetschalter etc.) voreingestellt und steuerbar umschaltbar ist.

Das Steuerstellglied 80 weist einen Verbindungsarm 82 auf, der sich von der horizontalen Drehachse des Lagers 81 des Steuerstellglieds 80 etwa im rechten Winkel bis über die Schwenkschiene 33 hinaus erstreckt. Dem Lager 81 gegenüberliegend weist der Verbindungsarm 82 ein freies Ende 83 auf. An das freie Ende 83 ist eine sich rückwärtig etwa in Richtung der Drehachse etwas nach unten erstreckende Verbindungshand 84 angeformt. Ein oberer Abschnitt des freien Endes 83 des Verbindungsarmes 82 weist ein rechteckiges Rollstegprofil auf. Die Deckenschiene 92 weist etwa oberhalb des freien Endes des Verbindungsarmes 82 eine Kerbe 86 auf.

In einer ersten Stellung des Steuerstellglieds 80 ragt der Verbindungsarm 82 vom Bodenschienensegment 91b in die Höhe und das freie Ende 83 schlägt in die Kerbe 86 gegen die Deckenschiene 92 des ersten Hängeförderbahnstücks 41 (Fig. 9). Dabei verbindet die Verbindungshand 84 die Deckenführungsschiene 92 des ersten Hängeförderbahnstücks 41 mit der Deckenführungsschiene 55 des zweiten Hängeförderbahnstücks 42 (Fig. 9). Die Hauptförderlaufbahn 67a des ersten Bodenschienensegments 91a des ersten Hängeförderbahnstücks 41, die Verbindungslaufbahn 59 der Schwenkschiene 33 und die Auslaufbahn 58 der Auslaufbodenschiene 44 des zweiten Hängeförderbahnstücks 42 bilden eine voreingestellte Durchlaufbahn durch die Auslaufweiche 10.

In einer zweiten Stellung des Steuerstellglieds 80 verbindet der Verbindungsarm 82 das zweite Bodenschienensegment 91b mit dem ersten Bodenschienensegment 91a. Dabei bilden das erste Bodenschienensegment 91a, der Verbindungsarm 82 des Steuerstellglieds 80 und das zweite Bodenschienensegment 91b eine gerade Durchlaufbahn durch die Auslaufweiche 10.

Nachfolgend wird der Betrieb der Auslaufweiche 10 erläutert. Der nicht dargestellte Antrieb der Förderkette wird eingeschaltet. Die Förderkette 73 läuft in der Förderanlage endlos um. Insbesondere läuft die Förderkette 73 horizontal in der Förderführung 71 der Hängeförderbahn 2. Der Haken 11, an dem der Kleiderbügel 13 befestigt ist und der in die Transportrolle 1 eingehängt ist, wird im ersten Abschnitt 67a der Hauptförderlaufbahn 67 des ersten Bodenschienensegments 91a von der Förderkette 43 mitgeschleppt (Fig. 7). Dabei rollt die Transportrolle 1 auf der Hauptförderlaufbahn 67.

Bei einem ersten Betriebsbeispiel (Fig. 9) ist das Steuerstellglied 80 in die erste Stellung gesteuert, wobei das freie Ende 83 des Verbindungsarms 82 in die Kerbe 86 der Deckenschiene 92 gehoben ist. Die Transportrolle 1 rollt in der Betriebstransportrichtung (A) auf das Steuerstellglied 80 und die Schwenkschiene 33 der Auslaufweiche 10 zu. Die Transportrolle 1 trifft auf die Verbindungshand 84 (Fig. 9). Die Verbindungshand setzt die Führung 84 der Transportrolle 1 durch die Deckenschiene 92 fort und leitet die Transportrolle 1 seitlich auf Schwenkschiene 33. Dabei gleitet das freie Ende des Hakens 11 seitlich aus dem Zwischenraum 74 vor dem Förderstift 75 (in Fig. 9 nicht dargestellt), so dass der Förderstift 75 keine Förderwirkung entfaltet. Aufgrund des Gefälles der Verbindungslaufbahn 59 rollt die Transportrolle 1 jedoch über die Schwenkschiene 33 und aufgrund des Gefälles der Auslaufbahn 58 weiter über die Auslaufbodenschiene 44. Somit folgt die Transportrolle 1 der voreingestellten Durchlaufbahn durch die Auslaufweiche 10.

Bei einem zweiten Betriebsbeispiel (Fig. 8) ist das Steuerstellglied 80 in die zweite Stellung gesteuert, wobei das freie Ende 83 des Verbindungsarms 82 an das erste Bodenschienensegment 91a anschlägt. Die Transportrolle 1 rollt in der Betriebstransportrichtung (A) auf das Steuerstellglied 80 und die Schwenkschiene 33 der Auslaufweiche 10 zu.

Die Transportrolle 1 rollt weiter über das rechteckige Rollstegprofil des freien Endes 83 des Verbindungsarms 82 auf den Verbindungsarm 82. Der Haken 11 schlägt mit seiner Innenseite gegen eine Unterkante 39 der Schwenkschiene 33. Der Förderstift 75 der Förderkette 73 schleppt den Haken 11 weiter fort. Dabei drückt der Haken 11 die Schwenkschiene 33 nach innen in Richtung der Bodenschiene 91 bzw. des Stellglieds 80. Die Schwenkschiene 33 folgt dem Druck und lenkt wegen der schrägen Lagerung der Schwenkschiene 33 seitlich in Richtung des ersten Hängeförderbahnstücks 41 und zugleich etwas nach oben aus. Der Haken 11 wird an der Schwenkschiene 33 vorbeigeschleppt. Die Transportrolle 1 läuft von dem Verbindungsarm 82 auf das zweite Bodenschienensegment 91b. Der Haken 11 gibt dabei die Schwenkschiene 33 an ihrem freien Ende 35 frei. Die Schwenkschiene 33 fällt nach unten. Wegen der schrägen Lagerung schwenkt die Schwenkschiene 33 zugleich seitlich nach außen, bis das freie Ende 35 an die Auslaufbodenschiene 44 anschlägt, so dass die voreingestellte Durchlaufbahn 67a, 59, 58 wieder hergestellt ist.

Somit hat die Förderkette 73 den Haken 11 mittels der Transportrolle 1 auf der nicht voreingestellten Bahn durch die Auslaufweiche 10 geschleppt, ohne dass die Auslaufweiche 10 angesteuert wurde. Vielmehr hat der Haken 11 die Schwenkschiene 33 betätigt und dadurch eine Bahnfreigabe bewirkt.

## Patentansprüche

1. Hängeförderbahnweiche (8, 10) für eine Förderbahn (2, 4, 6) zum Transport von hängenden Objekten, insbesondere von auf Bügeln (13) hängenden Kleidungsstücken, auf der Förderbahn (2, 4, 6), mit einer Förderführung (71) für ein antreibbares Förderorgan (73, 75), einem ersten Hängebahnförderstück (21; 41), das eine erste Tragelementführung (91) für wenigstens eine Transportrolle (1) aufweist, an der das Objekt mittels eines Tragelements (11) derart abhängbar ist, dass das Tragelement (11) mit dem Förderorgan (73, 75) in Eingriff steht, und einem zweiten Hängebahnförderstück (22; 42), das eine zweite Tragelementführung (24; 44) aufweist, die von der ersten Tragelementführung (91) beabstandet ist, und mit einer Schwenkführung (33, 93), deren eines Ende an der einen Tragelementführung (24; 91) angelenkt ist und die derart voreingestellt ist, dass das andere, freie Ende (35, 98) der Schwenkführung (33, 93) an die andere Tragelementführung (91; 44) anschlägt, so dass die Schwenkführung (33, 93) die erste (24; 91) und die zweite Tragelementführung (91; 44) miteinander verbindet, wobei die Schwenkführung (33, 93) zum Betätigen, insbesondere zum Auslenken, mittels des Tragelements (11) eingerichtet ist,
**dadurch gekennzeichnet, dass**
das zweite Hängeförderbahnstück (22; 42) an der Seite des ersten Hängeförderbahnstücks (21; 41) angeschlossen ist und die Schwenkführung (33; 93) derart an der einen Tragelementführung (24; 91) gelagert ist, dass die voreingestellte Schwenkführung (33; 93) bei Betätigung sowohl angehoben als auch seitlich ausgelenkt wird und dass die Schwenkführung (33; 93) nach der Betätigung aufgrund der Gewichtskraft der Schwenkführung oder aufgrund einer Zugfedervorspannung in die Voreinstellung zurückfällt.

2. Hängeförderbahnweiche nach Anspruch 1,
**dadurch gekennzeichnet, dass**
die Schwenkführung (33, 93) der Weiche (8, 10) in eine Durchlaufstellung voreingestellt ist, in der die Transportrolle (1) mit dem Tragelement (11) durch die Weiche (8, 10) läuft, ohne die Schwenkführung (33, 93) auszulenken.

3. Hängeförderbahnweiche nach Anspruch 1 und/oder 2,
**dadurch gekennzeichnet, dass**
die Schwenkführung (33; 93) derart voreingestellt ist, dass die Schwenkführung (33, 93) betätigbar ist, wenn die Transportrolle (1) mit dem Tragelement in einer vorgegebenen Betriebstransportrichtung (A) durch die Hängeförderbahnweiche (8, 10) läuft, und dass die Schwenkführung (33, 93) das Tragelement (11) blockiert, wenn die Transportrolle (1) mit dem Tragelement (11) in entgegen der vorgegebenen Betriebstransportrichtung (A) in die Hängeförderbahnweiche (8, 10) läuft.

4. Hängeförderbahnweiche nach einem oder mehreren der Ansprüche 1 bis 3,
**dadurch gekennzeichnet, dass**
die zweite Tragelementführung (24) in der Betriebstransportrictung (A) auf die erste Tragelementführung (91) zu läuft, und dass die Schwenkführung (93) an der zweiten Tragelementführung (24) gelagert ist.

5. Hängeförderbahnweiche nach einem oder mehreren der Ansprüche 1 bis 3,
**dadurch gekennzeichnet, dass**
die zweite Tragelementführung (44) in der Betriebstransportrichtung (A) von der ersten Tragelementführung (91) wegläuft, und dass die Schwenkführung (33) an der ersten Tragelementführung (91) gelagert ist.

6. Hängeförderbahnweiche nach einem oder mehreren der Ansprüche 1 bis 5,
**gekennzeichnet durch**
ein Steuerstellglied (80) zum steuerbaren Einstellen der Weiche (10) entweder in eine Förderstellung, in der die Transportrolle (1) die Hängeförderbahnweiche (10) auf der ersten Tragelementführung (91) durchläuft, oder in eine Abzweigungsstellung, in der die Transportrolle (1) von der ersten Tragelementführung (91) auf die zweite Tragelementführung (44) gelenkt wird.

7. Hängeförderbahnweiche nach Anspruch 6,
**dadurch gekennzeichnet, dass**
das Steuerstellglied (80) in die Förderstellung voreingestellt ist, durch Ansteuern in die Abzweigungsstellung gestellt wird und nach dem Ansteuern in die Förderstellung gemäß der Voreinstellung zurückkehrt.

8. Hängeförderbahnweiche nach Anspruch 6 und/oder 7,
**dadurch gekennzeichnet, dass**
das Steuerstellglied (80) als ein Verbindungsstück (82, 84) ausgebildet ist, das in der Förderstellung einen Eintrittsabschnitt (91a) der ersten Tragelementführung (91) mit einem Austrittsabschnitt (91b) der ersten Tragelementführung (91) verbindet und das in der Abzweigungsstellung den Eintrittsabschnitt (91a) der ersten Tragelementführung (91) mit der zweiten Tragelementführung (44) verbindet.

9. Hängeförderbahnweiche nach einem der vorstehenden Ansprüche,
**dadurch gekennzeichnet, dass**
die Tragelementführung eine Bodenschiene (91) und eine Deckenschiene (92) aufweist, die zum führenden Eingriff mit der Transportrolle (1) vorgesehen sind.

10. Hängeförderbahnweiche nach Anspruch 8 und/oder 9,
**dadurch gekennzeichnet, dass**
das Steuerstellglied (80) einen ersten Verbindungsarm (82), der als Bodenschiene ausgebildet ist, und eine vorzugsweise an einem freien Ende (83) des Verbindungsarms (82) angeformte und seitlich von diesem abstehende Verbindungshand (84), die als Deckenschiene ausgebildet ist, aufweist.

11. Hängeförderbahnweiche nach Anspruch 10,
**dadurch gekennzeichnet, dass**
das Steuerstellglied (80) an der ersten Tragelementführung (91) derart angelenkt ist, dass in der Förderstellung des Steuerstellglieds (80) der als Bodenschiene ausgebildete erste Verbindungsarm (82) die Bodenschiene im Eintrittsabschnitt (91a) der ersten Tragelementführung (91) mit der Bodenschiene im Austrittsabschnitt (91b) der ersten Tragelementführung (91) verbindet, und in der Abzweigungsstellung des Steuerstellglieds (80) die als Deckenschiene ausgebildete, seitlich abstehende Verbindungshand (84) die Deckenschiene (92) im Eintrittsabschnitt der ersten Tragelementführung (91) mit der Deckenschiene (55) der zweiten Tragelementführung (44) verbindet.

12. Hängeförderbahnweiche nach einem der vorstehenden Ansprüche,
**dadurch gekennzeichnet, dass**
die Schwenkführung in die Voreinstellung mittels einer Zugfeder vorgespannt ist.

13. Hängeförderbahnweiche nach einem der vorstehenden Ansprüche,
**dadurch gekennzeichnet, dass**
bei Betätigung der voreingestellten Schwenkführung die Schwenkführung gegen die Zugfedervorspannung ausgelenkt wird.

14. Hängeförderbahn (2, 4, 6) zum Transport von hängenden Objekten, insbesondere von auf Bügeln (13) hängenden Kleidungsstücken, auf der Hängeförderbahn (2, 4, 6), mit einer Förderführung (71) für ein antreibbares Förderorgan (73, 75) und einer Tragelementführung (91) für Transportrollen (1), an denen die Objekte mittels eines Tragelements (11) derart abhängbar sind, dass das jeweilige Tragelement (11) mit dem Förderorgan (73, 75) in Eingriff steht,
**gekennzeichnet durch**
eine Hängeförderbahnweiche (8, 10) nach einem oder mehreren der vorstehenden Ansprüche.

15. Hängeförderanlage zum Transport von hängenden Objekten, insbesondere von auf Bügeln (13) hängenden Kleidungsstücken, aufweisend eine Hängeförderbahn (2, 4, 6) mit einer Förderführung (71), die ein Förderorgan (73) führt, einer steuerbaren Antriebseinrichtung zum Antreiben des Förderorgans und einer Tragelementführung (91) für Transportrollen (1), an denen die Objekte jeweils mittels eines Tragelements (11) derart abhängbar sind, dass das jeweilige Tragelement (1) mit dem Förderorgan (73) in Eingriff steht,
**dadurch gekennzeichnet, dass**
die Hängeförderbahn nach Anspruch 14 ausgebildet ist.

## Claims

1. Suspension-conveyor diverter (8, 10) for a conveyor (2, 4, 6) for transporting hanging objects, in particular items of clothing hanging on hangers (13), on the conveyor (2, 4, 6), having a conveying guide (71) for a driveable conveying means (73, 75),having a first suspension-conveyor portion (21; 41), which has a first carrying-element guide (91) for at least one transporting roller (1), on which the object can be hung by means of a carrying element (11) such that the carrying element (11) engages with the conveying means (73, 75), and having a second suspension-conveyor portion (22; 42), which has a second carrying-element guide (24; 44), which is spaced apart from the first carrying-element guide (91), and having a pivoting guide (33, 93), of which one end is articulated on one carrying-element guide (24; 91) and which is preset such that the other, free end (35, 98) of the pivoting guide (33, 93) strikes against the other carrying-element guide (91; 44), with the result that the pivoting guide (33, 93) connects the first carrying-element guide (24; 91) and the second carrying-element guide (91; 44) to one another, the pivoting guide (33, 93) being set up for actuation, in particular for deflection, by means of the carrying element (11), **characterized in that** the second suspension-conveyor portion (22; 42) is connected to the side of the first suspension-conveyor portion (21; 41) and the pivoting guide (33; 93) is mounted on one carrying-element guide (24; 91) such that the preset pivoting guide (33; 93), upon actuation, is both raised and deflected laterally, and **in that** the pivoting guide (33; 93), following actuation, drops back into the preset position on account of the weight-induced force of the pivoting guide or on account of a tension spring preloading.

2. Suspension-conveyor diverter according to Claim 1, **characterized in that** the pivoting guide (33, 93) of the diverter (8, 10) is preset into a through-passage position, in which the transporting roller (1) with the carrying element (11) runs through the diverter (8, 10) without deflecting the pivoting guide (33, 93).

3. Suspension-conveyor diverter according to Claim 1 and/or 2, **characterized in that** the pivoting guide (33; 93) is preset such that the pivoting guide (33, 93) can be actuated when the transporting roller (1) with the carrying element runs through the suspension-conveyor diverter (8, 10) in a predetermined operating transporting direction (A), and **in that** the pivoting guide (33, 93) blocks the carrying element (11) when the transporting roller (1) with the carrying element (11) runs into the suspension-conveyor diverter (8, 10) counter to the predetermined operating transporting direction (A).

4. Suspension-conveyor diverter according to one or more of Claims 1 to 3, **characterized in that** the second carrying-element guide (24) runs toward the first carrying-element guide (91) in the operating transporting direction (A), and **in that** the pivoting guide (93) is mounted on the second carrying-element guide (24)

5. Suspension-conveyor diverter according to one or more of Claims 1 to 3, **characterized in that** the second carrying-element guide (44) runs away from the first carrying-element guide (91) in the operating transporting direction (A), and **in that** the pivoting guide (33) is mounted on the first carrying-element guide (91).

6. Suspension-conveyor diverter according to one or more of Claims 1 to 5, **characterized by** an adjusting control member (80) for setting the diverter (10) in a controllable manner either into a conveying position, in which the transporting roller (1) passes through the suspension-conveyor diverter (10) on the first carrying-element guide (91), or into a branching position, in which the transporting roller (1) is directed from the first carrying-element guide (91) onto the second carrying-element guide (44).

7. Suspension-conveyor diverter according to Claim 6, **characterized in that** the adjusting control member (80) is preset into the conveying position, is adjusted into the branching position by actuation and, following the actuation, returns into the preset conveying position.

8. Suspension-conveyor diverter according to Claim 6 and/or 7, **characterized in that** the adjusting control member (80) is designed as a connecting component (82, 84) which, in the conveying position, connects an entry section (91a) of the first carrying-element guide (91) to an exit section (91b) of the first carrying-element guide (91) and, in the branching position, connects the entry section (91a) of the first carrying-element guide (91) to the second carrying-element guide (44).

9. Suspension-conveyor diverter according to one of the preceding claims, **characterized in that** the carrying-element guide has a base rail (91) and a top rail (92), which are provided for guiding-type engagement with the transporting roller (1).

10. Suspension-conveyor diverter according to Claim 8 and/or 9, **characterized in that** the adjusting control member (80) has a first connecting arm (82), which is designed as base rail, and a connecting hand (84), which is preferably integrally formed on one free end (83) of the connecting arm (82), projects laterally from the latter and is designed as top rail.

11. Suspension-conveyor diverter according to Claim 10, **characterized in that** the adjusting control member (80) is articulated on the first carrying-element guide (91) such that, in the conveying position of the adjusting control member (80), the first connecting arm (82), which is designed as base rail, connects the base rail in the entry section (91a) of the first carrying-element guide (91) to the base rail in the exit section (91b) of the first carrying-element guide (91) and, in the branching position of the adjusting control member (80), the connecting hand (84), which projects laterally from the latter and is designed as top rail, connects the top rail (92) in the entry section of the first carrying-element guide (91) to the top rail (55) of the second carrying-element guide (44).

12. Suspension-conveyor diverter according to one of the preceding claims, **characterized in that** the pivoting guide is preloaded into the preset position by means of a tension spring.

13. Suspension-conveyor diverter according to one of the preceding claims, **characterized in that**, upon actuation of the preset pivoting guide, the pivoting guide is deflected against the tension spring preloading.

14. Suspension conveyor (2, 4, 6) for transporting hanging objects, in particular items of clothing hanging on hangers (13), on the suspension conveyor (2, 4, 6), having a conveying guide (71) for a driveable conveying means (73, 75), and having a carrying-element guide (91) for transporting rollers (1), on which the objects can be hung by means of a carrying element (11) such that the respective carrying element (11) engages with the conveying means (73, 75), **characterized by** a suspension-conveyor diverter (8, 10) according to one or more of the preceding claims.

15. Suspension-conveyor installation for transporting hanging objects, in particular items of clothing hanging on hangers (13), with a suspension conveyor (2, 4, 6) having a conveying guide (71) which guides a conveying means (73), having a controllable drive arrangement for driving the conveying means, and having a carrying-element guide (91) for transporting rollers (1), on which the objects can be hung in each case by means of a carrying element (11) such that the respective carrying element (11) engages with the conveying means (73), **characterized in that** the suspension conveyor is designed according to Claim 14.

## Revendications

1. Aiguillage pour système de voie suspendue (8, 10) pour une voie de transport (2, 4, 6) pour le transport d'objets suspendus, notamment de vêtements suspendus à des cintres (13) sur la voie de transport (2, 4, 6), comprenant un guide de transport (71) pour un organe de transport (73, 75) pouvant être entraîné, un premier tronçon de transport de voie suspendue (21 ; 41) qui présente un premier guide d'éléments de support (91) pour au moins un rouleau de transport (1) auquel l'objet peut être suspendu au moyen d'un élément de support (11) de telle sorte que l'élément de support (11) soit en prise avec l'organe de transport (73, 75), et un deuxième tronçon de transport de voie suspendue (22 ; 42) qui présente un deuxième guide d'éléments de support (24 ; 44) qui est espacé du premier guide d'éléments de support (91), et comprenant un guide pivotant (33, 93) dont une extrémité est articulée à l'un des guides d'éléments de support (24 ; 91) et qui est préajusté de telle sorte que l'autre extrémité libre (35, 98) du guide pivotant (33, 93) vienne buter contre l'autre guide d'éléments de support (91 ; 44), de sorte que le guide pivotant (33, 93) relie l'un à l'autre le premier (24 ; 91) et le deuxième (91 ; 44) élément de support, le guide pivotant (33, 93) étant prévu pour effectuer un actionnement, notamment une déviation, au moyen de l'élément de support (11),
**caractérisé en ce que**
le deuxième tronçon de transport de voie suspendue (22 ; 42) est raccordé du côté du premier tronçon de transport de voie suspendue (21 ; 41) et le guide pivotant (33 ; 93) est monté sur l'un des guides d'éléments de support (24 ; 91) de telle sorte que le guide pivotant préajusté (33 ; 93) soit soulevé et également dévié latéralement lors de l'actionnement et que le guide pivotant (33 ; 93) retombe dans la position préajustée après l'actionnement, sous l'effet de la force de pesanteur du guide pivotant ou du fait d'une précontrainte par ressort de traction.

2. Aiguillage pour système de voie suspendue selon la revendication 1,
**caractérisé en ce que**
le guide pivotant (33, 93) de l'aiguillage (8, 10) est préajusté dans une position de passage continu dans laquelle le rouleau de transport (1) passe avec l'élément de support (11) à travers l'aiguillage (8, 10) sans dévier le guide pivotant (33, 93).

3. Aiguillage pour système de voie suspendue selon la revendication 1 et/ou 2,
**caractérisé en ce que**
le guide pivotant (33 ; 93) est préajusté de telle sorte que le guide pivotant (33, 93) puisse être actionné lorsque le rouleau de transport (1) passe avec l'élément de support dans une direction de transport fonctionnelle prédéfinie (A) à travers l'aiguillage pour système de voie suspendue (8, 10) et **en ce que** le guide pivotant (33, 93) bloque l'élément de support (11) lorsque le rouleau de transport (1) passe avec l'élément de support (11) dans la direction opposée à la direction de transport fonctionnelle prédéfinie (A) dans l'aiguillage pour système de voie suspendue (8, 10).

4. Aiguillage pour système de voie suspendue selon l'une quelconque ou plusieurs des revendications 1 à 3,
**caractérisé en ce que**
le deuxième guide d'éléments de support (24) avance dans la direction de transport fonctionnelle (A) vers le premier guide d'éléments de support (91), et **en ce que** le guide pivotant (93) est monté sur le deuxième guide d'éléments de support (24).

5. Aiguillage pour système de voie suspendue selon l'une quelconque ou plusieurs des revendications 1 à 3,
**caractérisé en ce que**
le deuxième guide d'éléments de support (44) s'écarte du premier guide d'éléments de support (91) dans la direction de transport fonctionnelle (A) et **en ce que** le guide pivotant (33) est monté sur le premier guide d'éléments de support (91).

6. Aiguillage pour système de voie suspendue selon l'une quelconque ou plusieurs des revendications 1 à 5,
**caractérisé par**
un actionneur de commande (80) pour l'ajustement commandable de l'aiguillage (10) soit dans une position de transport dans laquelle le rouleau de transport (1) passe à travers l'aiguillage pour système de voie suspendue (10) sur le premier guide d'éléments de support (91), soit dans une position de déviation dans laquelle le rouleau de transport (1) est orienté du premier guide d'éléments de support (91) vers le deuxième guide d'éléments de support (44).

7. Aiguillage pour système de voie suspendue selon la revendication 6,
**caractérisé en ce que**
l'actionneur de commande (80) est préajusté dans la position de transport, est amené par commande dans la position de déviation et est ramené après la commande dans la position de transport correspondant au préajustement.

8. Aiguillage pour système de voie suspendue selon la revendication 6 et/ou 7,
**caractérisé en ce que**
l'actionneur de commande (80) est réalisé sous la forme d'une pièce de connexion (82, 84), qui, dans la position de transport, relie une portion d'entrée (91a) du premier guide d'éléments de support (91) à une portion de sortie (91b) du premier guide d'éléments de support (91) et qui, dans la position de déviation, relie la portion d'entrée (91a) du premier guide d'éléments de support (91) au deuxième guide d'éléments de support (44).

9. Aiguillage pour système de voie suspendue selon l'une quelconque des revendications précédentes,
**caractérisé en ce que**
le guide d'éléments de support présente un rail inférieur (91) et un rail supérieur (92) qui sont prévus pour s'engager par guidage avec le rouleau de transport (1).

10. Aiguillage pour système de voie suspendue selon la revendication 8 et/ou 9,
**caractérisé en ce que**
l'actionneur de commande (80) présente un premier bras de connexion (82) qui est réalisé sous la forme d'un rail inférieur et une prise de connexion (84) formée de préférence à une extrémité libre (83) du bras de connexion (82) et saillant latéralement depuis celui-ci, qui est réalisée sous forme de rail supérieur.

11. Aiguillage pour système de voie suspendue selon la revendication 10,
**caractérisé en ce que**
l'actionneur de commande (80) est articulé au premier guide d'éléments de support (91) de telle sorte que dans la position de transport de l'actionneur de commande (80), le premier bras de connexion (82) réalisé sous forme de rail inférieur relie le rail inférieur dans la portion d'entrée (91a) du premier guide d'éléments de support (91) au rail inférieur dans la portion de sortie (91b) du premier guide d'éléments de support (91), et que dans la position de déviation de l'actionneur de commande (80), la prise de connexion (84) réalisée sous forme de rail supérieur, saillant latéralement, relie le rail supérieur (92) dans la portion d'entrée du premier guide d'éléments de support (91) au rail supérieur (55) du deuxième guide d'éléments de support (44).

12. Aiguillage pour système de voie suspendue selon l'une quelconque des revendications précédentes,
**caractérisé en ce que**
le guide pivotant est précontraint dans la position de préajustement au moyen d'un ressort de traction.

13. Aiguillage pour système de voie suspendue selon l'une quelconque des revendications précédentes,
**caractérisé en ce que**
lors de l'actionnement du guide pivotant préajusté, le guide pivotant est dévié à l'encontre de la précontrainte du ressort de traction.

14. Système de voie suspendue (2, 4, 6) pour le transport d'objets suspendus, notamment de vêtements suspendus à des cintres (13), sur la voie de transport (2, 4, 6), comprenant un guide de transport (71) pour un organe de transport (73, 75) pouvant être entraîné et un guide d'éléments de support (91) pour des rouleaux de transport (1), auxquels les objets peuvent être suspendus au moyen d'un élément de support (11) de telle sorte que l'élément de support (11) respectif soit en prise avec l'organe de transport (73, 75),
**caractérisé par**
un aiguillage pour système de voie suspendue (8, 10) selon l'une quelconque ou plusieurs des revendications précédentes.

15. Installation de transport suspendue pour le transport d'objets suspendus, notamment de vêtements suspendus à des cintres (13), présentant une voie de transport suspendue (2, 4, 6) avec un guide de transport (71), qui guide un organe de transport (73), un dispositif d'entraînement commandable pour entraîner l'organe de transport et un guide d'éléments de support (91) pour des rouleaux de transport (1), auxquels les objets peuvent être suspendus à chaque fois au moyen d'un élément de support (11), de telle sorte que l'élément de support respectif (1) soit en prise avec l'organe de transport (73),
**caractérisée en ce que**
la voie de transport suspendue est réalisée selon la revendication 14.
